# EUROPEAN PATENT SPECIFICATION

(11) **EP 2 242 945 B1**
(45) Date of publication and mention of the grant of the patent: **14.12.2011**
(21) Application number: 09706971.0
(22) Date of filing: 07.01.2009
(51) Int. Cl.: F16K 31/44

(54) **VALVE ACTUATOR**
VENTILAKTOR
ACTIONNEUR DE VANNE

(30) Priority: 28.01.2008 IT PR20080007
(43) Date of publication of application: 27.10.2010
(73) Proprietor: DVG Automation S.P.A., 29016 Cortemaggiore (Piacenza) (IT)
(72) Inventor: DORDONI, FILIPPO, I-29016 Cortemaggiore (Piacenza) (IT)
(74) Representative: Guareschi, Antonella
(86) International application number: PCT/IB2009/050030
(87) International publication number: WO 2009/095803

(56) References cited:
- GB-A- 986 482
- GB-A- 1 262 605

## Description

The present invention relates to a valve actuator, having a device for converting a reciprocating rectilinear motion into a reciprocating angular rotary motion and vice versa for use in valve actuators.

Devices are known to be used in the art of valve actuators for converting the rectilinear motion of an actuator into a rotary motion of a valve stem, or vice versa, by a mechanism known as sliding block linkage.

Namely, a sliding block linkage allows conversion of the uniform rotary motion of a flywheel driven by a motor into a reciprocating rectilinear motion.

Such activators have been disclosed in documents GB 986 482 or GB 1 262 605, for example.

The object of the present invention is to provide a valve actuator comprising a device that can ensure conversion from reciprocating linear motion to reciprocating rotary motion and vice versa to reduce friction of moving parts and optimize the distribution of sliding components.

These objects and advantages are achieved by a device for converting a reciprocating rectilinear motion into a reciprocating angular motion and vice versa, according to the present invention, which is characterized by the annexed claims.

This and other features will be more apparent from the following description of a few embodiments, which are shown by way of example and without limitation in the accompanying drawings, in which:
- Figure 1 is a broken-away plan view of a drive device for valve actuators of the present invention,
- Figure 2 is a perspective view of the device of Figure 1,
- Figure 3 is a top view of the device of Figure 2,
- Figure 4 shows a rear view of the device of Figure 2.

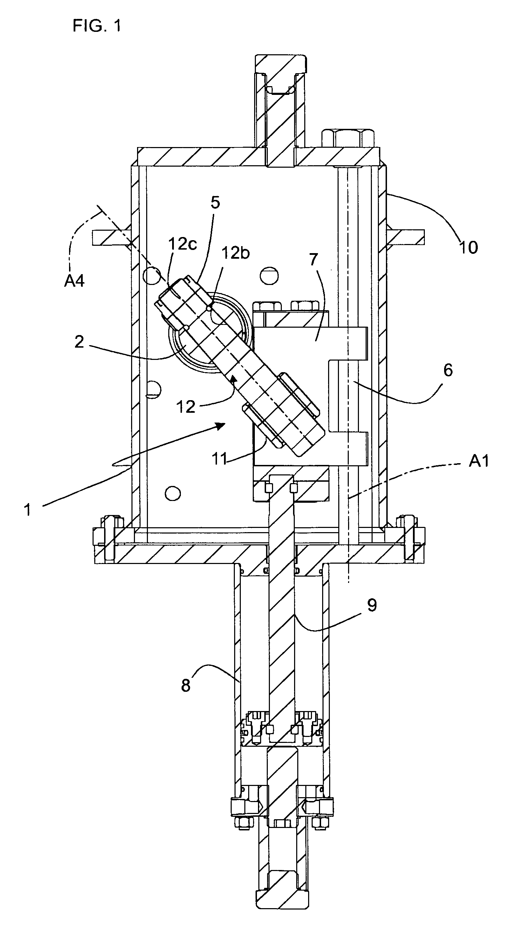

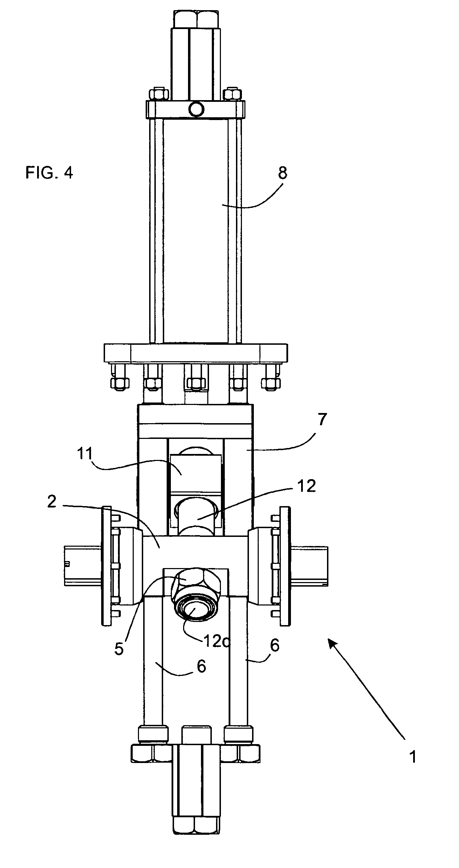

Referring to Figures 1, 2, 3 and 4, numeral 1 generally designates an actuator of the type comprising a device for converting a reciprocating rectilinear motion into a reciprocating angular rotary motion in a valve actuator.

Namely, the device 1 comprises a case 10 for housing the required rectilinear/rotary motion converting components.

At least one linear guide 6 is attached to two inner opposite walls of the case 10, with a slider 7 freely sliding therein; said slider 7 being allowed to move by a stem 9 of an actuator cylinder 8, by the kinematic components 11 and 12 as described below, by a pivot 2, depending on the movement to be imparted thereto.

As mentioned above, the slider 7 is acted upon by a stem 9 connected to the slider 7 by mechanical connections of known type, along an axis A2 parallel to the axis A1 of the guide 6; said stem 9 being in turn controlled, for instance by a hydraulic or pneumatic cylinder 8 which is fixed to the case 10 by a flange or equivalent means.

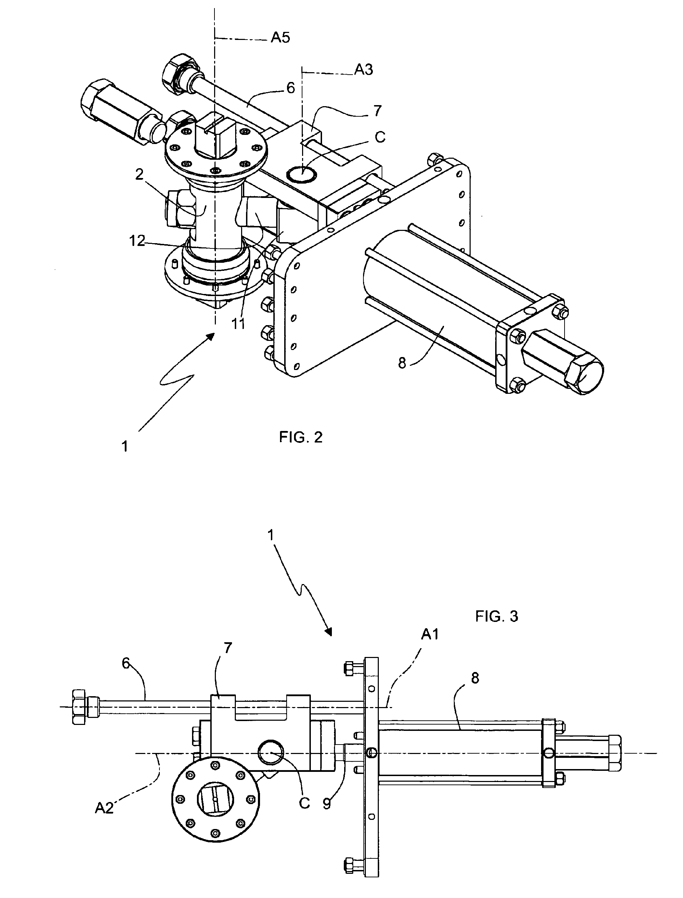

A sleeve 11 is hinged to said slider 7, to freely rotate about an axis A3 that passes through the point C of Figure 3, i.e. perpendicular to the above axes A1 and A2.

In the illustrated embodiment, the sleeve 11 is conveniently located within the slider 7, so that it can be displaced by a substantially barycentric force; nonetheless it might be also located elsewhere, as long as it is connected to the slider 7, without departure from the application scope.

Due to the above described connection between the sleeve 11 and the slider 7, any sliding motion of the slider 7 will cause the sleeve 11 to rotate while maintaining a radial orientation of its axial direction A4, i.e. towards the center of rotation defined by the pivot 2, which will be conveniently fixed to the valve control stem.

The pivot 2 and the sleeve 11 will be connected together with the help of a pin 12, i.e. a mechanical connection member between the two kinematic parts.

One end of this pin 12 is free to slide within the corresponding sleeve 11, whereas the other end has a first conical portion 12b matching the corresponding seat of the pivot 2 and a threaded shank 12c for engagement by a corresponding ring nut 5.

As a result, any rotation of the pivot 2 about the axis of rotation designated by A5 (parallel to A3 and perpendicular to A1, A2, A4) corresponds to an identical angular rotation of the pin 12 which slides relative to the sleeve 11 and drives the slider 7 and the stem 9 and vice versa.

All moving and mutually sliding parts are interfaced by an open bush made of steel + bronze + polytetrafluoroethylene (PFTE) material.

Namely, there are two bushes between the pivot 2 and the flanges, one bush between the pin 12 and the sleeve 11, two bushes between the sleeve 7 and the two guiding bars 6.

## Claims

1. A valve actuator (1) for converting a reciprocating rectilinear motion into a reciprocating angular rotary motion and/or vice versa, comprising a pivot (2) for generating an angular rotary motion about its axis A5, a slider (7) linearly sliding in at least one guide (6) which defines an axis A1 perpendicular to said axis A5, **characterized in that** said pivot (2) and slider (7) are connected together by elements (11, 12) for rotary-to-rectilinear motion conversion or vice versa; said elements including a pin (12) integral by one end to said pivot (2), whereas the other end slides within a sleeve (11) which freely pivots at a point (C) on the slider (7), about an axis A3 perpendicular to said axis A1 ; any rotation of the pivot (2) about the axis of rotation A5 parallel to the axis A3 corresponds to an identical angular rotation of the pin (12) which in turn drives the slider (7) and/or vice versa.

2. A valve actuator (1) as claimed in claim 1, **characterized in that** the end of the pin that fits into the pivot (2) comprises a first conical section (12b) matching the corresponding seat of the pivot (2) and a threaded shank (12c) for engagement by a corresponding ring nut (5).

3. An actuator (1) as claimed in claim 1, **characterized in that** said sleeve (11) is located within the slider (7), so that it can be displaced by a substantially barycentric force.

## Patentansprüche

1. Ventilantrieb (1) zum Umwandeln einer Hin-und Her-geradlinigen Bewegung in eine oszillierende Winkeldrehbewegung und/oder umgekehrt, umfassend einen Drehzapfen (2) um eine Winkeldrehbewegung um seine Achse A5, einen Schieber (7), der linear in mindestens eine einzige Führung (6) schiebt, die eine Achse A1 senkrecht zu der besagten Achse A5 definiert, **dadurch gekennzeichnet, dass** die besagten Zapfen (2) und Schieber (7) mittels Elemente (11, 12) zusammen verbunden sind, die eine dreh-geradlinige Umwandlung oder umgekehrt verursachen; wobei die besagten Elemente einen Stift (12) umfassen, der bei einem Ende mit dem besagten Zapfen (2) integriert ist, während das andere End in einer Hülse schiebt, die sich frei bei einem Punkt (C) auf dem Schieber dreht, um eine senkrecht zu dieser Achse A1 verlaufenden Achse A3; wobei jede Drehung des Zapfens (2) um die Drehachse A5 parallel zur Achse A3 einer identischen winklige Drehung des Stiftes (12) entspricht, der wiederum treibt den Schieber und/oder umgekehrt.

2. Ventiltrieb (1) nach Anspruch 1, **dadurch gekennzeichnet, dass** das Ende des Zapfens, der in die Pivot passt, einen ersten konischen Bereich (12b) umfasst, zur Anpassung mit der entsprechenden Aufnahme der Pivot (2) und eines Gewindeschaftes (12c) für den Eingriff durch eine entsprechende Ringmutter (5).

3. Antrieb (1) nach Anspruch 1, **dadurch gekennzeichnet, dass** die besagte Hülse (11) sich innerhalb der Schieberegler (7) so befindet, dass sie durch eine im Wesentlichen baryzentrische Kraft verschoben werden kann.

## Revendications

1. Actionneur de vanne (1) pour convertir un mouvement réciproque rectilinéaire dans un mouvement réciproque angulaire et vice-versa, comprenant un pivot (2) pour générer un mouvement de rotation angulaire autour de son axe A5, un curseur (7) glissant linéairement dans au moins une guide (6) qui définit un axe A1 perpendiculaire au dit axe A5, **caractérisé en ce que** les dits pivot (2) et curseur (7) sont connectés ensemble par des éléments (11, 12) pour une conversion avec un mouvement rotatif-rectilinéaire ou vice-versa, les dits éléments incluant une pointe (12) intégrée par une extrémité au dit pivot (2), tandis que l'autre extrémité glisse dans un manchon (11) qui tourne librement dans un point (C) sur le curseur (7), autour d'un axe A3 perpendiculaire au dit axe A1 ; chaque rotation du pivot (2) autour de l'axe de rotation A5 parallèle à l'axe A3 correspondant à une rotation angulaire identique de la pointe (12) qui à son tour actionne le curseur (7) et/ou vice-versa.

2. Actionneur de vanne (1) selon la revendication 1, **caractérisé en ce que** l'extrémité de la pointe qui s'engage dans le pivot (2) comprend une première section conique (12b) engagée dans le correspondant siège du pivot (2) et un arbre fileté (12c) pour s'engager avec un correspondant écrou annulaire (5).

3. Actionneur (1) selon la revendication 1, **caractérisé en ce que** le dit manchon (11) est situé à l'intérieur du curseur (7), en manière qu'il peut être déplacé par une force substantiellement barycentrique.
